# EUROPEAN PATENT APPLICATION

(11) **EP 2 563 000 A1**
(43) Date of publication of application: **27.02.2013**
(21) Application number: 11188094.4
(22) Date of filing: 07.11.2011
(51) Int. Cl.: H04M 3/48, H04W 4/16

(54) **Methods for providing call back service in GSM**

(30) Priority: 25.08.2011 IN CH29072011
(71) Applicant: Alcatel Lucent, 75007 Paris (FR)
(72) Inventor: Manchanda, Amit, 201305 Uttar Pradesh (IN)
(74) Representative: Sciaux, Edmond

(57) **Abstract**

A system and method for providing call back service feature in GSM is described. Using an Intelligent network and appropriate routing apparatus besides usual telecommunication network components a call back service can be implemented in a GSM based telecommunication network. In addition, an optimal solution is provided where based on the network operator of the calling user and called user different method may be used reducing load and efficiently utilizing the telecommunication network.

## Description

### TECHNICAL FIELD

The present invention relates to communication networks and, more particularly, to automatic call back service feature in wireless communication networks.

### BACKGROUND

When placing a phone call, it is quite common to receive a busy signal from a called party. Generally, a calling party may be allowed to leave a message for the called party or will have to keep redialing the number and wait until the called party's line gets free. In some cases, the called party might notice that a call has been received from a known person, but might not have sufficient funds to call back the calling party. In a business environment, when an employee needs to contact a customer (or any person of interest to the company) and the call does not get connected due to various reasons, the employee needs to make a note and try to call the customer again at a later time. The employee continuously needs to redial the person's number and keep trying to get connected to the person. Eventually the employee might give up, which might lead to loss of a potential customer. If a call back feature is available at the employee's user equipment, it can be ensured that the customer is called by continuously redialing the customer until the customer answers the call. However, constant redialing leads to usage of communication network resources unnecessarily. As a result, resources may not be available for other services. Further, sometimes the network may get busy and communication between available called party and calling party may not be feasible when both are available.

Most of the existing landline based wired communication networks provide call back feature to users. On receiving a busy signal while calling a subscriber (called party), the calling party can hang up and dial a predefined code set for call back service followed by the called subscriber's telephone number. The network switch continuously monitors the subscriber's telephone and as soon as the called party is free, the network connects a call between the calling party and called user. The calling party may have to pay for this service.

To provide call back services in case of wireless communication networks, there are many challenges. There are many different operators providing various value added services like call waiting, call back and so on. A call back service provided by one operator network would require support from another operator network when both the called party and calling party are with different operators. In addition, the location of users may change continuously, requiring constant updates.

### SUMMARY

In view of the foregoing, an embodiment herein provides a method for providing call back service in a GSM communication network. The method comprising accepting a request from an originating mobile station to connect to a destination mobile station, identifying service provider for the originating mobile station and the destination mobile station, receiving status information from the destination mobile station, sending a call back announcement to the originating mobile station in case the destination mobile station is busy, checking if the announcement is acceptable to the destination mobile station and automatically initiating a call by the originating mobile station to the destination mobile station when the destination mobile station gets free. The method identifies the service provider for the originating mobile station and the destination mobile station by employing information stored on an intelligent network. The service provider for the originating mobile station and the destination mobile station can be same or different. The mobile switching centre/ visitor location register (MSC/VLR) reply a status message to Intelligent Network which indicates that the destination mobile station is busy. In this case an announcement is sent to the originating mobile station by the intelligent network. If the originating mobile station presses a correct key, then a automatic initiation of the call between the originating mobile station and the destination mobile station is done by the intelligent network by sending messages to an originating mobile switching centre/ visitor location register (originating MSC/VLR) and a destination mobile switching centre/ visitor location register (destination MSC/VLR).

Embodiments further disclose an intelligent network for enabling call back service in GSM communication network. The intelligent network is configured for accepting a request from an originating mobile station to connect to a destination mobile station, identifying service provider for the originating mobile station and the destination mobile station, receiving status information from the destination mobile's MSC/VLR, sending a call back announcement to the originating mobile station in case the destination mobile station is busy, checking if the feature is requested by originating mobile station and automatically initiating a call by the originating mobile station to the destination mobile station when the destination mobile station gets free. The money is paid by the original originating mobile station. The intelligent network identifies the service provider for the originating mobile station and the destination mobile station by employing information stored on the intelligent network. The service provider for the originating mobile station and the destination mobile station can be same or different. The mobile switching centre/ visitor location register (MSC/VLR) reply a status message to Intelligent Network which indicates that the destination mobile station is busy. In this case. Intelligent network sends the call back announcement to the originating mobile station. The intelligent network automatically initiates the call between the originating mobile station and destination mobile station, if the originating mobile station had entered the correct key, by sending messages to an originating mobile switching centre/ visitor location register MSC/VLR and a destination mobile switching centre/ visitor location register MSC/VLR.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates the components in network environment where call back service can be provided between users with the same network operator, according to the embodiments as disclosed herein;

FIG. 2 illustrates the components in network environment where call back service can be provided between users of different network operator, according to the embodiments as disclosed herein;

FIG. 3 illustrates components in network environment where an embodiment of call back service is provided, according to the embodiments disclosed herein;

Figs. 4a, 4b and 4c are flowcharts illustrating how call back feature is provided between users with the same network provider, according to the embodiments disclosed herein;

Figs. 5a and 5b are flowcharts illustrating how call back feature is provided between users with different network providers, according to the embodiments disclosed herein; and

Figs. 6a - 6e are flowcharts illustrating how an optimal call back feature between users with the same network operator and between users of different network operators, according to the embodiments disclosed herein.

### DETAILED DESCRIPTION OF EMBODIMENTS

The embodiments herein, the various features, and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

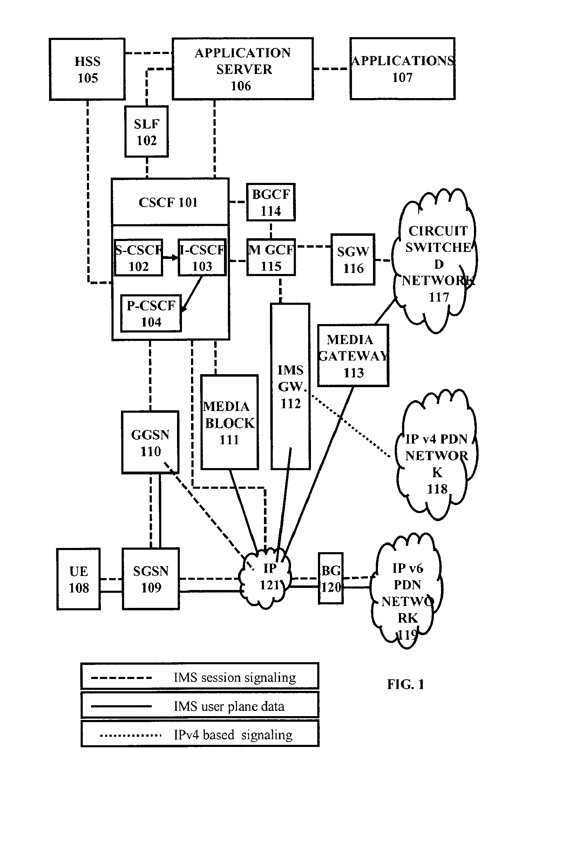

FIG. 1 illustrates the components in a network environment where call back service can be provided between users with the same network operator, according to the embodiments as disclosed herein. As depicted in FIG. 1, the network used for implementing call back service comprises of an intelligent network (IN) 103, an specialized resource point 107, an originating mobile switching centre (MSC)/ visiting location register (VLR) 102, a destination mobile switching centre (MSC)/ visiting location register (VLR) 106, a gateway mobile using switching centre (GMSC) 104 and a home location register (HLR) 105. The figure also shows the mobile stations (MS) of user X 100 and user Y 108. The IN 103 is a mobile operator specific network architecture, which communicates between network components and services provided by the network operator. The IN 103 is used for charging ongoing call. IN interacts with SSP and various signal transfer points. The SRP (specialized resource point) 107, allows user devices to send service requests to the IN 103. Also, the SRP 107 communicates with the network components like originating MSC/VLR 102 to which the user is connected. The mobile switching centre MSC-102,106 routes voice calls, SMS and other services provided by the operator. The MSC 102, 106 is also responsible for setting and releasing an end-to-end connection established between two users. Each MSC 102,106 connects to various Base Stations (BS) in an area, which receive radio signals form users. Each base station has a Visiting Location Register (VLR) 102, 106. The MSC (102, 106) can access the VLR (102,106) to determine the exact location of a user. The MSC 106 connects to the Home Location Register (HLR) 105 for obtaining user related information like SIM and MISISDN and so on. The Gateway Mobile Switching Centre (GMSC) 104 is used for routing mobile calls received from a mobile station via an originating MSC/VLR 102. The GMSC 104 specific to the operator finds the destination mobile stations and then routes the call to destination MSC/VLR 106, which connects to the destination MS 108. The GMSC 104 receives information about the destination MSC/VLR 106 by accessing the home location register 105. The HLR 105 is a database holding subscriber information like IMSI, MSIDN and so on, present MSC/VLR, services subscribed to by the user. Generally, there is one HLR 105 for each operator's network but there may smaller units defined for geographical areas. The HLR 105 uses protocol to communicate with the MSC/VLR 102,106, GMSC 104 and in some networks also the AUC-authentication unit. On a location updating request, from a MSC/VLR 102,106 concerning an entering MS, i.e. a new visitor, the HLR 105 will execute several operations. It will register the new VLR 102,106 address in the database, send the subscriber information to that new VLR102, 106 and also tell the old VLR102, 106 to erase that subscriber's information. The VLR can thus be seen as a distributed HLR105 holding information only about the MS's served by that MSC/VLR. During the setup of a mobile terminated call, the HLR 105 will be requested by the GMSC 104 to provide routing information for rerouting. The HLR 105will fetch that information from the correct MSC/VLR 102,106, or the database in case of a forwarding number, and send it to the GMSC 104.

When a user X 100 tries to call user Y 108 and both user X and user Y are part of the same IN or belong to the same operator, the IN 103 checks if user X has sufficient balance for. If user X does not have sufficient balance, user requested to recharge account is sent to user X 100. If user X has sufficient balance for the call, a flag "in call" is set for user X 100. The IN 103 checks if user Y 108 is busy. If user Y 108 is not busy a flag "in call" is set for user Y. The call is then forwarded to the destination MSC 106 via a trigger is sent to the terminating IN 103 by the originating MSC 102 and call is established between user X 100 and user Y 108. The IN 103 stores all the information of this communication session in IDP initial detection point message. (Initial DP message). If user X 100 has sufficient balance and user Y 108 is still busy call back feature is announced to user X 100. An announcement saying, "Party Y is busy. Do you want call me back feature? You will be charged 1 Euro for this service. If you want this feature the press 5, else press 6" will be played to user X 100. If the user X 100 presses 5 and selects call back feature, a flag that indicates a "party was called" is set against user Y 108. If user X 100 presses 6 and does not select call back service, the flag "in_call" set for user X is cleared and user X may receive a busy tone or an advertisement while waiting and the IN 103 rejects the call, as the user Y 108 is busy. A busy tone is played to user X 100 after which the call is disconnected. This helps in reducing the network load. The IN 103 continuously starts checking user Y's 108 status by polling the destination MSC/VRL 106. User Y 108 status is polled by IN 103 till it gets free. As soon as user Y 108 is free, the "in call flag" is cleared for user Y 108. The IN 103 then polls the status of originating user X 100 continuously and checks if user X 100 is free. The polling continues until user X 100 gets free. If user X 100 is available, "in call" flag status is cleared for user X 100. The IN 103 then checks if user X 100 has sufficient balance for the call. If user X 100 does not have sufficient balance, a message is sent requesting user to recharge account. If the user X 100 has enough balance and IN 103 receives a message saying user Y 108 is free, IN 103 sends (423) a message to originating MSC/VLR 102, to establish connection with user X 100. The "in call" flags are also set for both users X 100 and user Y 108. The IN 103 also opens up connection with user Y 108 via the destination MSC/VLR 108. The IN 103 connects both the user parties (user X and user Y) and a call is established. The party was called flag is cleared from User Y 108 indicating call back service has been provided. Once the connection is established user X 100 gets charged for the call.

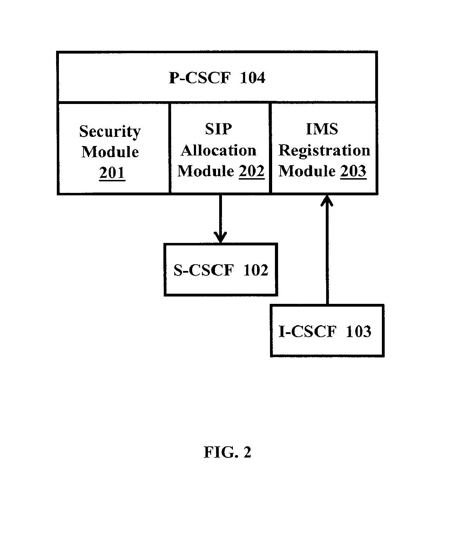

FIG. 2 illustrates the components in network environment where call back service can be provided between users of different network operator, according to the embodiments as disclosed herein. Figure 2 comprises of the intelligent network (IN) 103, a routing apparatus 107, originating mobile switching centre (MSC)/ visiting location register (VLR) 102, destination mobile switching centre (MSC)/ visiting location register (VLR) 106, gateway mobile using switching centre (GMSC) and home location register (HLR) 105.the figure also shows the mobile stations (MS) of user X 100 and user Y 108.

User X 100 and User Y 108 are not part of same IN 103, as they belong to two different network operators. When user X 100 tries to call user Y 108 and, the IN 103 checks if user X 100 has sufficient balance for the call and forwards the call to the destination MSC/VLR 106, if the user has sufficient balance. If the user has insufficient balance, user is requested to recharge his account. The IN 103 then checks if user Y 108 is busy. If the user is not busy, a call is established between user X 100 and user Y 108. In case where user Y 108 is busy, a report O_BUSY is sent back to the IN 103 and a call back feature is announced for user X 100 by the SRP 107. An announcement saying, "Party Y is busy. Do you want call me back feature? You will be charged 1 Euro for this service. If you want this feature the press 5, else press 6" will be played to user X 100. If user presses 6, it means the user does not select (508) call back feature, the user X 100 receives a busy tone or an advertisement message. The IN 103 rejects the call, as the user Y 108 is busy. In some cases, when the network is relatively free advertisements may be played for the user while waiting for user Y 108 to get free. If the user X 100 presses 5 and selects call back feature, a message is sent to the originating MSC/VLR102. The IN 103 sends an ATI- Any time interrogation signal to the HLR 105 to get the address of the destination VLR 106 from the HLR 105.and. The IN 103 also sends information regarding call back feature being selected to the terminating MSC/VLR 106. The destination VLR 106 receives the ATI signal via the HLR 105 and IN 103 continuously checks user Y's 108 status. The originating MSC/VLR also continuously polls the status of user X 100.This check continues until user Y gets free.. The IN 103 then checks if user X 100 is free. As soon as user Y 108 is free, the termination VLR 106 informs IN 103 of user Y 108's availability. If user X 100 is not free, the polling continues until user X 100 is free. If user X 100 is free and user Y 108 is also free, the IN 103 checks if user X 100 has sufficient balance for the call. If user X 100 does not have sufficient balance, a message is played requesting user X 100 to recharge his account. If user has sufficient balance then, The IN 103 connects both the originating and destination MSC and a call is established User X 100 gets charged for the call.

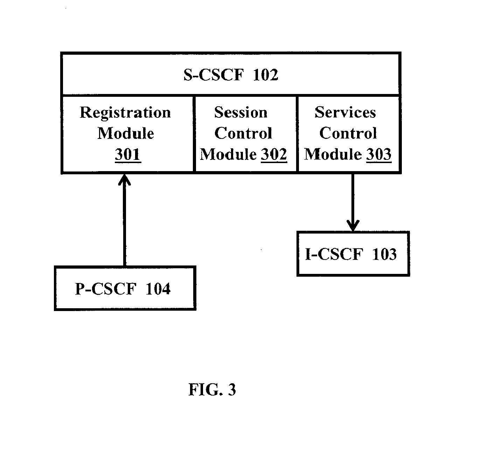

FIG. 3 illustrates components in network environment where a contact back feature solution is provided, according to the embodiments disclosed herein. Figure 3 contains the same network components show in figure 2. Figure 3 is an example of a mobile virtual network operator. However the Intelligent network 103 is shown to be on the destination side mobile stations operator network. The Intelligent network can either be on the originating side mobile station operator network or the destination side mobile station based on implementation. The method used to provide an optimal call back service involve the methods described in figure 1 and figure 2. The network checks if both user X 100 and user Y 108 are on the same IN 103. If they are part of the same IN 103 and are with the same network operator, the system and method described in Figure 1 is used. If user X 100 and Y belong to different network operators and different IN 103, the system and method described in figure 2 is used. Let us consider a case where user X 100 calls user Y. User X 100 and user Y 108 belong to different IN's.. In this case the flag "in call" will be set for user Y 108. In another case where mobile station X 100 calls mobile station Y and user X 100 and user Y 108 belong to same IN then the call will land to IN of the originating side and here only we will know that user Y 108 is on this IN and it is busy as its "in call" flag is high. Thus there is no need to forward the call to destination MSC. This helps in saving Network resources. The call back feature allows the system to be used in an efficient manner.

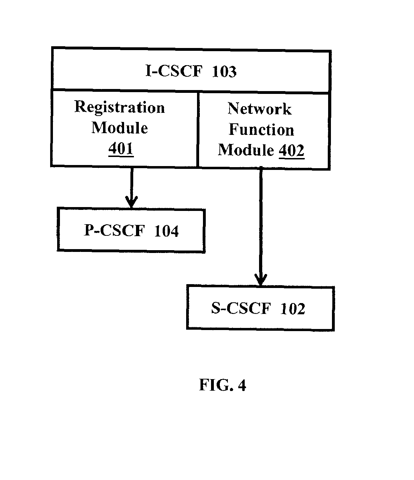

FIG. 4 is a flowchart illustrating how call back feature is provided between users with the same network provider, according to the embodiments disclosed herein. When a user X 100 tries to call (401) user Y 108, the IN 103 checks if user X has sufficient balance for (402). If user X does not have sufficient balance, user requested (403) to recharge account is sent to user X 100. If user X 100 has sufficient balance, a flag "in call" is set (404) for user X 100. The IN 103 checks if user Y 108 is busy (406). If user Y 108 is not busy (405), a flag "in call" is set (406) for user Y. The call is then forwarded to the destination MSC 106 via a trigger is sent (407) to the terminating IN 103 by the originating MSC 102 and call is established (408) between user X 100 and user Y 108. If user X 100 has sufficient balance and user Y 108 is still busy call back feature is announced (409) to user X 100. An announcement saying, "Party Y is busy. Do you want call me back feature? You will be charged 1 Euro for this service. If you want this feature the press 5, else press 6" will be played to user X 100. If the user X 100 presses 5 and selects (410) call back feature, a flag that indicates a "party was called" is set (414) against user Y 108. If user X 100 presses 6 and does not select (410) call back service, the "in call" for user X is cleared (411) and user X may receive (412) a busy tone or an advertisement while waiting and the IN 103 rejects (413)the call, as the user Y 108 is busy. A busy tone is played to user X 100 after which the call is disconnected. This helps in reducing the network load. The IN 103 continuously (415) starts checking user Y's 108 status by polling the destination MSC/VRL 106. User Y 108 status (415) is polled by IN 103 till it gets free. As soon as user Y 108 is free (416), the "in call flag" is cleared (417) for user Y 108. The IN 103 then polls the status of originating user X 100 continuously (418) and checks (419) if user X 100 is free. The polling continues until user X 100 gets free. If user X 100 is available, "in call" flag status is cleared (420) for user X 100. The IN 103 then checks if user X 100 has sufficient balance (421) for the call. If user X 100 does not have sufficient balance, a message is sent requesting (422) user to recharge account. If the user X 100 has enough balance and IN 103 receives a message saying user Y 108 is free, IN 103 sends (423) a message to originating MSC/VLR 102, to establish connection with user X 100. The "in_call" flags are also set (423) for both user X 100 and user Y 108. The IN 103 also opens up connection (424) with user Y 108 via the destination MSC/VLR 108. The IN 103 connects (425) both the user parties (user X and user Y) and a call is established. The party was called flag is cleared from User Y 108 (426) indicating call back service has been provided. Once the connection is established user X 100 gets charged (427) for the call. The various actions in method 400 may be performed in the order presented, in a different order or simultaneously. Further, in some embodiments, some actions listed in FIG. 4 may be omitted.

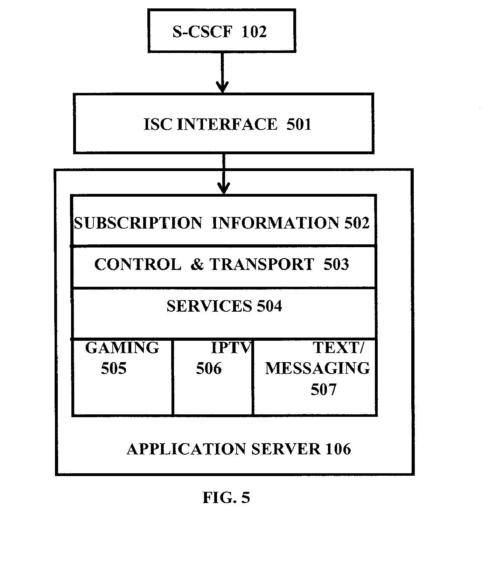

FIG. 5 is a flowchart illustrating how call back feature is provided between users with different network provider, according to the embodiments disclosed herein. When user X 100 tries to call (501) user Y 108 and user X 100 and User Y 108 are not part of same IN 103 as they belong to two different network operators. The IN 103 checks (502) if user X 100 has sufficient balance for the call and forwards (504) the call to the destination MSC/VLR 106, if the user has sufficient balance. If the user has insufficient balance, user is requested (503) to recharge his account. The IN 103 then checks (505) if user Y 108 is busy. If the user is not busy, a call is established (506) between user X 100 and user Y 108. In case where user Y 108 is busy, a report O BUSY is sent back to the IN 103 and a call back feature is announced (507) for user X 100 by the SRP 107. An announcement saying, "Party Y is busy. Do you want call me back feature? You will be charged 1 Euro for this service. If you want this feature the press 5, else press 6" will be played to user X 100. If user presses 6, it means the user does not select (508) call back feature, the user X 100 receives (509) a busy tone or an advertisement message. The IN 103 rejects (510) the call, as the user Y 108 is busy. In some cases, when the network is relatively free advertisements may be played for the user while waiting for user Y 108 to get free. If the user X 100 presses 5 and selects (508) call back feature, a message is sent to the originating MSC/VLR102. The IN 103 sends (511) an ATI- Any time interrogation signal to the HLR 105 to get the address of the destination VLR 106 from the HLR 105.and. The IN 103 also sends (512) information regarding call back feature being selected to the terminating MSC/VLR 106. The destination VLR 106 receives the ATI signal via the HLR 105 and IN 103 continuously checks (513) user Y's 108 status. The originating MSC/VLR also continuously polls (514) the status of user X 100.This check continues until user Y gets free.. The IN 103 then checks if user X 100 is free. As soon as user Y 108 is free (515), the termination VLR 106 informs (516) IN 103 of user Y 108's availability If user X 100 is not free, the polling continues until user X 100 is free (516). If user X 100 is free and user Y 108 is also free, the IN 103 checks if user X 100 has sufficient (517) balance for the call. If user X 100 does not have sufficient balance, a message is played requesting (518) user X 100 to recharge his account. If user has sufficient balance then, The IN 103 connects (519) both the originating and destination MSC and a call is established (519). User X 100 (520) gets charged for the call. The various actions in method 500 may be performed in the order presented, in a different order or simultaneously. Further, in some embodiments, some actions listed in FIG. 5 may be omitted.

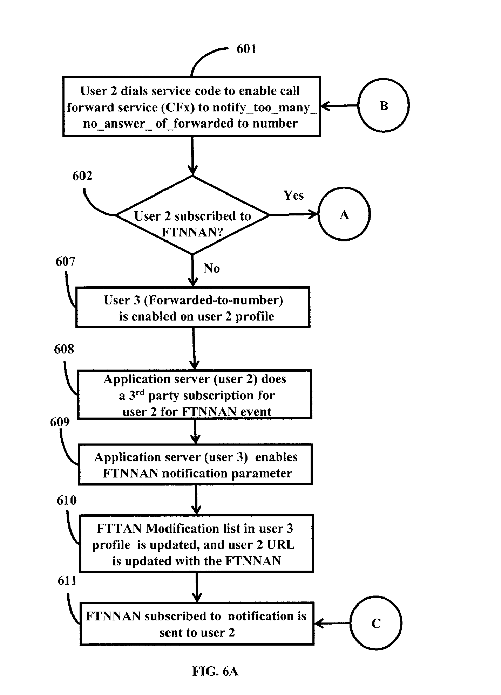

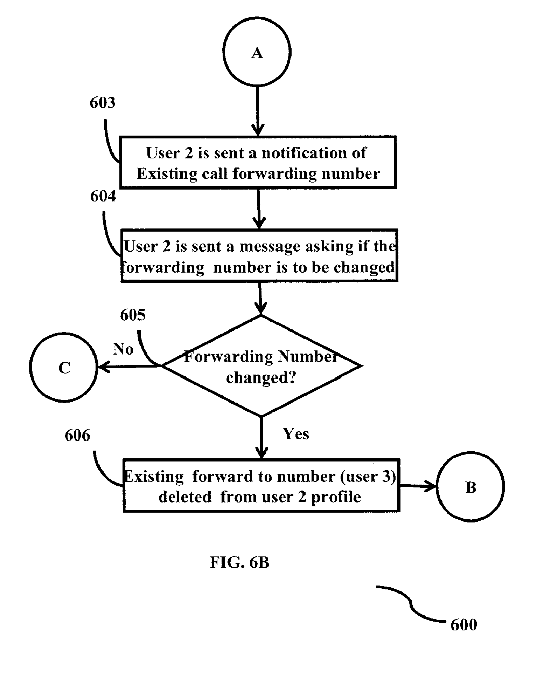

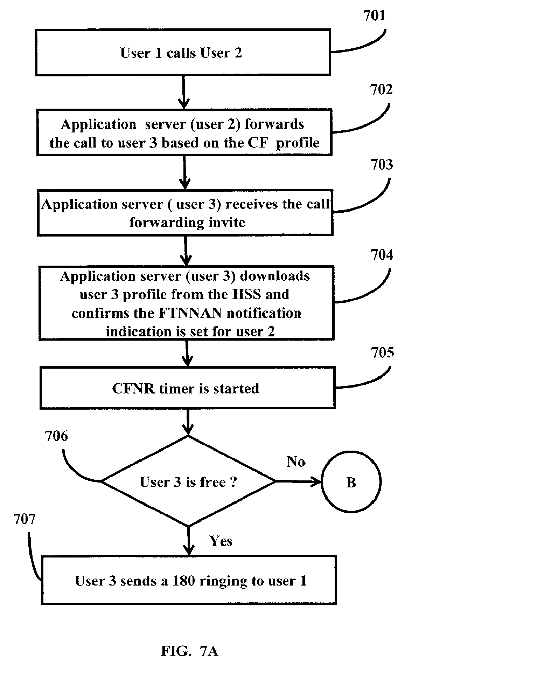

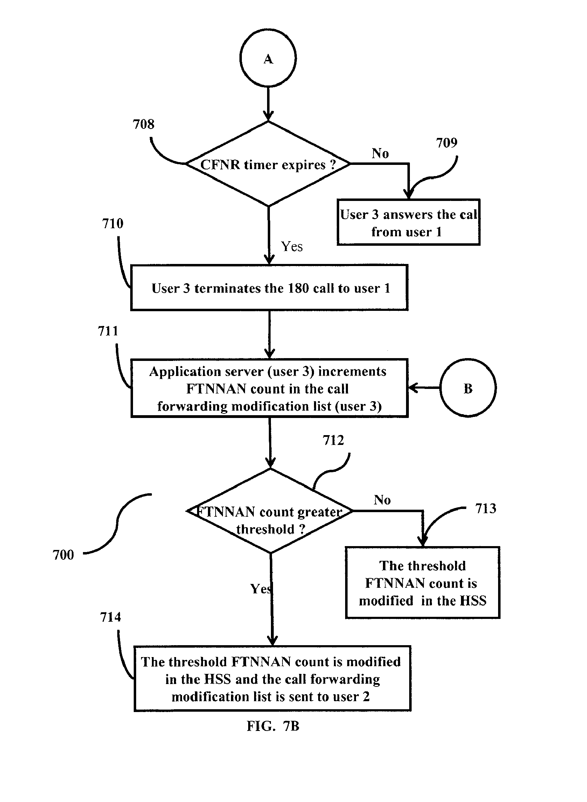

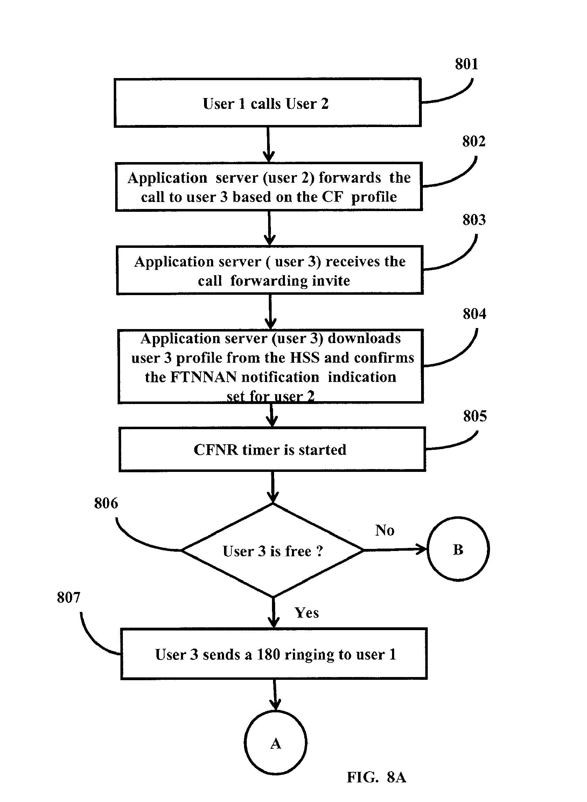

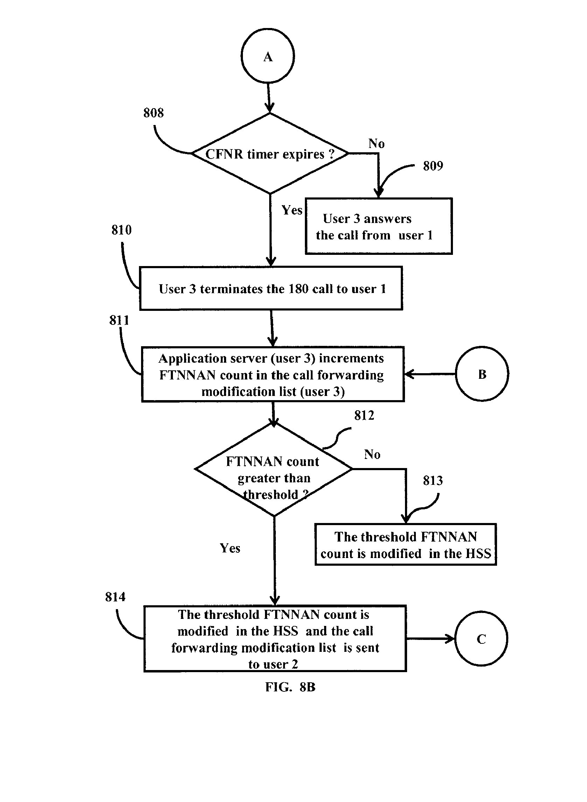

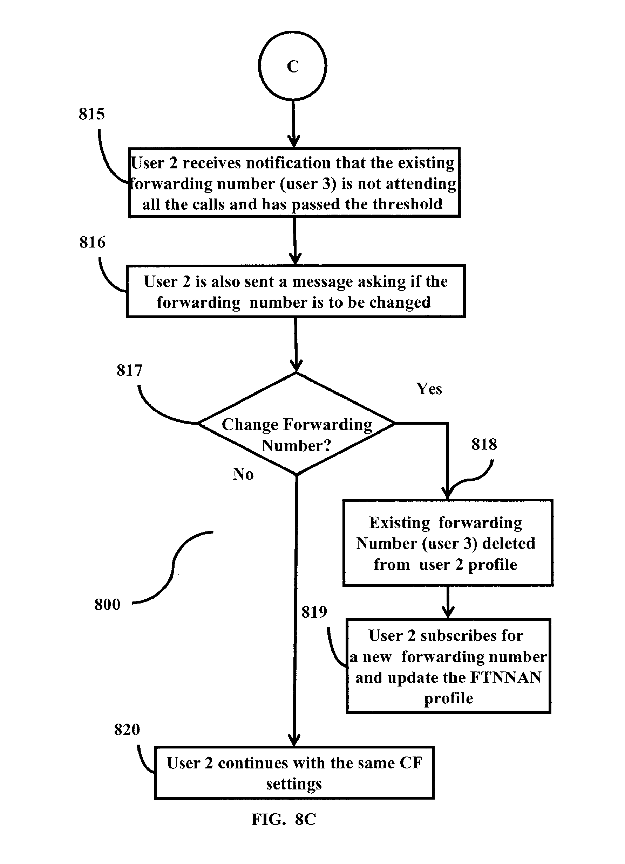

FIG. 6 is a flowchart illustrating how call back feature between users with the same network operator and between users of different network operators, according to the embodiments disclosed herein. When User X 100 tries to call (601) user Y 108, the IN 103 checks (602) if user X 100 and user Y 108 belong to the same operator network and same IN 103. If user X 100 and user Y 108 are not part of same IN 103, and belong to two different network operators, the IN 103 checks if user X 100 has sufficient balance (603) for the call and an "in flag" is set for user X . The IN 103 then forwards (605) the call to the terminating MSC/VLR 106. In case the user X has insufficient balance, user is requested (604) to recharge account. The IN 103 then checks (606) if user Y 108 is busy. If the user Y 108 is not busy, a call is established (607) between user X 100 and user Y and the flag "in call" is cleared (608) for X when the call is ended. In case, where user Y 108 is busy, a report O_BUSY is sent back to the IN 103 and a call back feature is announced (609) for user X 100. An announcement saying, "Party Y is busy. Do you want call me back feature? You will be charged 1 Euro for this service. If you want this feature the press 5, else press 6" will be played to user X 100. If user presses 6, it means the user does not select (610) call back feature, a busy tone is played (611) to user X 100 or an advertisement and finally the IN 103 rejects (612) the call from user X. In some cases, when the network is relatively free advertisements may be played for the user while waiting for user Y 108 to get free. If the user X 100 presses 5 and selects (610) call back feature, a message is sent to the originating MSC/VLR102. The IN 103 sends an ATI- Any time interrogation signals to the HLR 105 and gets (613) the address of the destination VLR 106. The IN 103 also sends (613) information regarding call back feature being selected to the destination MSC/VLR 106. The destination MSC/VLR 106 receives the ATI signal via the HLR 105 and continuously starts checking (615) user Y's 108 status. The originating MSC/VLR 102 then starts polling (616) for the status of user X 100. The IN 103 then checks (617) if user X 100 is free. If user X 100 is not free (617) the polling continues until user X 100 is free. As soon as user Y 108 is free, the destination VLR 106 informs (618) IN 103 of user Y 108 availability. If user X 100 is free and user Y 108 is also free, the IN 103 checks if user X 100 has sufficient balance (619) for the call. If user X 100 does not have sufficient balance, a message is played requesting (620) user X 100 to recharge his account. If user has sufficient balances then, the IN 103 connects (621) the destination and originating MSC 102 and a call is established (621). The user X 100 gets charged (622) for the call.

When user X 100 and user Y 108 belong to the same operator and if user X 100 has sufficient balance, a flag "in call" is set (404) for user X 100. The IN 103 checks if user Y 108 is busy (624). If user Y 108 is not busy (624), a flag "in call" is set (625) for user Y. The call is then forwarded (626)to the destination MSC 106 via a trigger is sent (626) to the terminating IN 103 by the originating MSC 102 and call is established (627) between user X 100 and user Y 108. If user X 100 has sufficient balance and user Y 108 is still busy call back feature is announced (628) to user X 100. An announcement saying, "Party Y is busy. Do you want call me back feature? You will be charged 1 Euro for this service. If you want this feature the press 5, else press 6" will be played to user X 100. If the user X 100 presses 5 and selects (629) call back feature, a flag that indicates a "party was called" is set (633) against user Y 108. If user X 100 presses 6 and does not select (629) call back service, the "in call" for user X is cleared (630) and user X may receive (631) a busy tone or an advertisement while waiting and the IN 103 rejects (632)the call, as the user Y 108 is busy. A busy tone is played to user X 100 after which the call is disconnected. This helps in reducing the network load. The IN 103 continuously (634) starts checking user Y's 108 status by polling the destination MSC/VRL 106. User Y 108 status (634) is polled by IN 103 till it gets free. As soon as user Y 108 is free (635), the "in call flag" is cleared (636) for user Y 108. The IN 103 then polls the status of originating user X 100 continuously (637) and checks (638) if user X 100 is free. The polling continues until user X 100 gets free. If user X 100 is available, "in_call" flag status is cleared (639) for user X 100. The IN 103 then checks if user X 100 has sufficient balance (640) for the call. If user X 100 does not have sufficient balance, a message is sent requesting (641) user to recharge account. If the user X 100 has enough balance and IN 103 receives a message saying user Y 108 is free, IN 103 sends (642) a message to originating MSC/VLR 102, to establish connection with user X 100. The "in call" flags are also set (642) for both user X 100 and user Y 108. The IN 103 also opens up connection (643) with user Y 108 via the destination MSC/VLR 108. The IN 103 connects (644) both the user parties (user X and user Y) and a call is established. The party was called flag is cleared from User Y 108 (645) indicating call back service has been provided. Once the connection is established user X 100 gets charged (646) for the call. The various actions in method 600 may be performed in the order presented, in a different order or simultaneously. Further, in some embodiments, some actions listed in FIG. 6 may be omitted.

Referring now to the drawings, and more particularly to FIGS. 1 through 6, where similar reference characters denote corresponding features consistently throughout the figures, there are shown embodiments.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and is not limiting. Therefore, while the embodiments herein have been described in terms of preferred embodiments, those skilled in the art will recognize that the embodiments herein can be practiced with modification within the spirit and scope of the claims as described herein

## Claims

1. A method for providing call back service in a GSM communication network, said method comprising
Accepting a request from an originating mobile station to connect to a destination mobile station;
Identifying service provider for said originating mobile station and said destination mobile station;
Receiving status information from said destination mobile station; Sending a call back announcement to said originating mobile station in case said destination mobile station is busy;
Checking if said announcement is acceptable to said destination mobile station; and
Automatically initiating a call by said originating mobile station to said destination mobile station when said destination mobile station gets free.

2. The method as in claim 1, wherein said method identifies said service provider for said originating mobile station and said destination mobile station by employing information stored on an intelligent network.

3. The method as in claim 1, wherein said service provider for said originating mobile station and said destination mobile station are same.

4. The method as in claim 1, wherein said service provider for said originating mobile station and said destination mobile station are different.

5. The method as in claim 1, wherein said status information indicates if a flag is set on said destination IN, where said flag indicates said destination mobile station is busy.

6. The method as in claim 1, wherein said status information is received by said destination mobile station through a mobile switching centre/ visitor location register (MSCNLR).

7. The method as in claim 1, wherein said call back announcement is sent to said originating mobile station by said intelligent network.

8. An intelligent network for enabling call back service in GSM communication network, where said intelligent network is configured for
Accepting a request from an originating mobile station to connect to a destination mobile station;
Identifying service provider for said originating mobile station and said destination mobile station;
Receiving status information from said destination mobile station; Sending a call back announcement to said originating mobile station in case said destination mobile station is busy;
Checking if said announcement is acceptable to said destination mobile station; and
Automatically initiating a call by said originating mobile station to said destination mobile station when said destination mobile station gets free.

9. The intelligent network as in claim 8, wherein said network identifies said service provider for said originating mobile station and said destination mobile station by employing information stored on said intelligent network.

10. The intelligent network as in claim 8, wherein said service provider for said originating mobile station and said destination mobile station are same.

11. The intelligent network as in claim 8, wherein said service provider for said originating mobile station and said destination mobile station are different.

12. The intelligent network as in claim 8, wherein said status information indicates if a flag is set on said destination mobile station, where said flag indicates said destination mobile station is busy.

13. The intelligent network as in claim 8, wherein said status information is received by said destination mobile station through a mobile switching centre/ visitor location register MSC/VLR.

14. The intelligent network as in claim 8, wherein said network sends said call back announcement to said originating mobile station.

15. The intelligent network in claim 8, wherein said network automatically initiates said call between said originating mobile station and destination mobile station by sending messages to an originating mobile switching centre/ visitor location register MSC/VLR and a destination mobile switching centre/ visitor location register MSC/VLR.
